(19) Europäisches Patentamt
European Patent Office
Office européen des brevets

(11) **EP 4 759 622 A1**

(12) **EUROPEAN PATENT APPLICATION**

(43) Date of publication:
**17.06.2026 Bulletin 2026/25**

(21) Application number: **25220883.0**

(22) Date of filing: **04.12.2025**

(51) International Patent Classification (IPC):
***B60L 53/62*** *(2019.01)*    ***B60L 58/12*** *(2019.01)*
***B60L 58/25*** *(2019.01)*    ***B60L 3/00*** *(2019.01)*

(52) Cooperative Patent Classification (CPC):
**B60L 58/12; B60L 3/003; B60L 3/0046;**
**B60L 3/0061; B60L 58/25;** B60L 2240/425;
B60L 2240/525; B60L 2240/527; B60L 2240/545;
B60L 2240/549

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **16.12.2024 JP 2024219764**

(71) Applicant: **Toyota Jidosha Kabushiki Kaisha**
**Toyota-shi, Aichi-ken 471-8571 (JP)**

(72) Inventors:
• **ITO, Hirotaka**
**TOYOTA-SHI, AICHI-KEN, 471-8571 (JP)**
• **OSHINO, Takayuki**
**TOYOTA-SHI, AICHI-KEN, 471-8571 (JP)**
• **YOSHIDA, Hiroshi**
**TOYOTA-SHI, AICHI-KEN, 471-8571 (JP)**

(74) Representative: **Cabinet Beau de Loménie**
**103, rue de Grenelle / CS 90800**
**75340 Paris Cedex 07 (FR)**

(54) **ELECTRIFIED VEHICLE**

(57) A control device sets allowable power for power input to and output from a power storage device based on the temperature and the power storage amount of the power storage device, and controls an electric motor such that the power input to and output from the power storage device does not exceed the allowable power. The control device has an allowable maximum limit rate, and is configured to decrease the allowable power at the allowable maximum limit rate when an evaluation function for the temperature of a component provided on a path of a current input to and output from the power storage device is equal to or greater than a limit start value. The limit start value is set to a value at which the evaluation function is maintainable at or less than a threshold value when the allowable power is decreased at the allowable maximum limit rate.

FIG. 4

EP 4 759 622 A1

**Description**

1. Field of the Invention

The present disclosure relates to an electrified vehicle, and more specifically, to charging and discharging control of a power storage device mounted in the electrified vehicle.

2. Description of Related Art

Japanese Unexamined Patent Application Publication No. 2015-147472 (JP 2015-147472 A) discloses a control device of a hybrid electric vehicle. The control device executes overheating protection control for suppressing an increase in temperature or promoting a decrease in temperature of an electric device including a rotary electric machine for driving and a cooling medium supplied for cooling the rotary electric machine when the temperature of the electric device is equal to or greater than a predetermined value. The overheating protection control includes control of reducing a power generation load (regenerative torque) during deceleration regenerative braking and control of reducing a torque assist amount for a drive shaft.

SUMMARY OF THE INVENTION

In an electrified vehicle that travels using power stored in a power storage device, there is a need to suppress overheating of a component provided in a current path through which a current input to and output from the power storage device flows. As a protection measure for heat generation of the component, a method of suppressing the heat generation itself by limiting the current flowing through the component without increasing a level of a heat resistance specification of the component can be adopted.

However, in the method of limiting the current flowing through the component, depending on a timing at which a current limit is started with respect to the heat generation of the component, a magnitude of the current limit, or the like, the electrified vehicle may be unable to secure a desired output, and traveling performance of the electrified vehicle may be decreased.

The present disclosure has been made to solve such a problem, and an object of the present disclosure is to control charging and discharging of a power storage device without reducing traveling performance of an electrified vehicle while a component of a current path is appropriately protected from heat generation.

An electrified vehicle according to the present disclosure includes an electric motor configured to generate a traveling drive force of the electrified vehicle, a power storage device configured to input and output power to and from the electric motor and a control device. The control device is configured to set allowable power for the power input to and output from the power storage device based on the temperature and the power storage amount of the power storage device. The control device is configured to control the electric motor such that the power input to and output from the power storage device does not exceed the allowable power. The control device has an allowable maximum limit rate for a limit rate that is a decrease speed of the allowable power. The control device is configured to decrease the allowable power at the allowable maximum limit rate when an evaluation function for the temperature of a component provided on a path of a current input to and output from the power storage device is equal to or greater than a limit start value. The limit start value is set to a value at which the evaluation function is maintainable at or less than a threshold value determined from a heat resistance limit temperature of the component when the allowable power is decreased at the allowable maximum limit rate.

With the configuration, by using the allowable maximum limit rate to limit the allowable power, the limit start value can be increased, and a time for which the limit of the allowable power is executed can be shortened. Accordingly, it is possible to suppress the decrease in the traveling performance of the electrified vehicle while the heat generation of the component is suppressed.

The limit start value may be greater than a value at which the evaluation function is maintainable at or less than the threshold value when the allowable power is decreased in proportion to a deviation of the evaluation function with respect to the limit start value. Accordingly, the limit start value is increased and a time for which the limit rate is the allowable maximum limit rate is increased, as compared with a configuration in which the allowable power is decreased in proportion to the deviation of the evaluation function with respect to the limit start value, and thus a time for which limit of the allowable power is executed can be shortened.

The control device may be configured to, when the evaluation function is equal to or greater than the limit start value, calculate a target value of the allowable power based on the evaluation function in each control cycle using a control map that is predetermined. The control device may be configured to determine a control command value of the allowable power in a current control cycle by decreasing the target value in a previous control cycle at the allowable maximum limit rate, within a range in which the control command value is not less than the target value in the current control cycle. With the configuration, the allowable power can be quickly decreased to the target value based on the evaluation function.

The control map may be a map by which the target value is specifiable from the evaluation function, and the target value may change non-linearly with respect to the evaluation function from a first power value determined from the temperature and the power storage amount of the power storage device to a second power value at which the evaluation function is maintainable at the threshold value, in a region in which the evaluation function is equal to or greater than the limit start value and equal to or less than the threshold value. With the configuration, when the evaluation function is equal to or greater than the limit start value, the allowable power can be decreased by using the allowable maximum limit rate.

The control device may have an allowable maximum relaxation rate for a relaxation rate that is a relaxation speed of the allowable power. The control device may be configured to calculate, when the evaluation function is less than the limit start value, the target value in the current control cycle based on the temperature and the power storage amount of the power storage device. The control device may be configured to determine the control command value of the allowable power in the current control cycle by increasing the target value in the previous control cycle at the allowable maximum relaxation rate, within a range in which the control command value does not exceed the target value in the current control cycle. With the configuration, when the evaluation function is less than the limit start value in accordance with the limit of the allowable power, the allowable power can be quickly increased to the allowable power determined from the temperature and the power storage amount of the power storage device.

According to the present disclosure, it is possible to control the charging and discharging of the power storage device without reducing the traveling performance of the electrified vehicle while the component of the current path is appropriately protected from heat generation.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram showing an example of an overall configuration of an electrified vehicle according to an embodiment;
FIG. 2 is a graph showing an outline of limit processing of output allowable power of a battery according to a comparative example;
FIG. 3 is a graph showing an example of a temporal change of a limit rate of the output allowable power in the limit processing shown in FIG. 2;
FIG. 4 is a graph showing an outline of limit processing of output allowable power of a battery according to the present embodiment;
FIG. 5 is a graph showing an example of a temporal change of a limit rate of the output allowable power in the limit processing shown in FIG. 4; and
FIG. 6 is a flowchart that describes a procedure of the limit processing of the output allowable power of the battery according to the present embodiment.

DETAILED DESCRIPTION OF EMBODIMENTS

In the following, an embodiment of the present disclosure will be described in detail with reference to the drawings. It should be noted that, in the drawings, the same or corresponding parts are designated by the same reference signs and the description thereof will not be repeated.

Overall Configuration of Electrified Vehicle

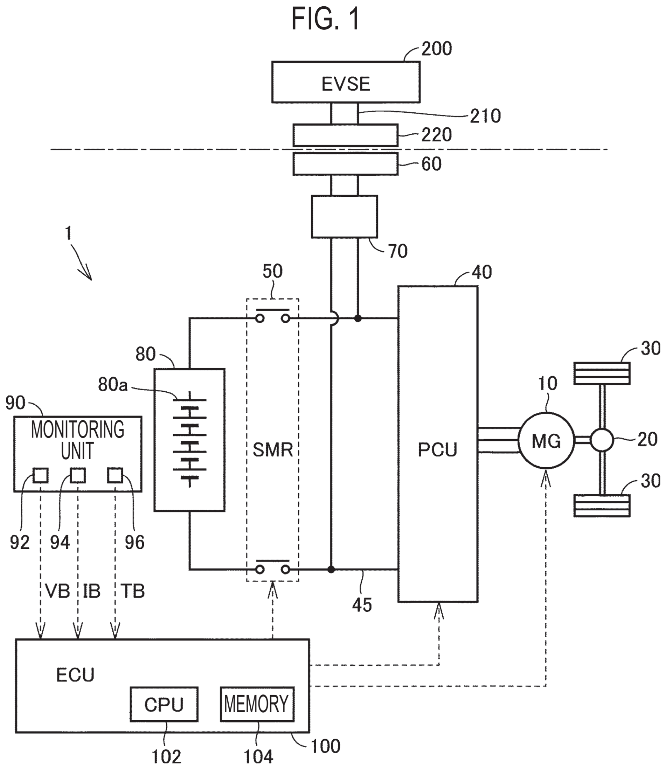

FIG. 1 is a diagram showing an example of an overall configuration of an electrified vehicle 1 according to the present embodiment. In the present embodiment, the electrified vehicle 1 is, for example, a battery electric vehicle. The electrified vehicle 1 may be a hybrid electric vehicle, a plug-in hybrid electric vehicle, or the like.

The electrified vehicle 1 includes a motor generator (MG) 10, a mechanical power transmission gear 20, drive wheels 30, a power control unit (PCU) 40, a system main relay (SMR) 50, a battery 80, a monitoring unit 90, and an electronic control unit (ECU) 100.

The MG 10 is an alternating current rotary electric machine, and is, for example, a three-phase alternating current synchronous electric motor in which a permanent magnet is embedded in a rotor. The MG 10 is driven by receiving supply of power from the battery 80 via the PCU 40. A driving force of the MG 10 is transmitted to the drive wheels 30 via the mechanical power transmission gear 20 configured to include a speed reducer, a differential device, and the like.

During braking of the electrified vehicle 1 or during reduction of acceleration on a downhill slope, the MG 10 is driven by the drive wheels 30, and the MG 10 operates as a generator to perform regenerative power generation. The power generated by the MG 10 is stored in the battery 80 via the PCU 40.

The PCU 40 is a power conversion device that converts power between the MG 10 and the battery 80 in both directions. The PCU 40 includes, for example, an inverter and a converter that operate based on a control signal from the ECU 100.

The converter boosts a direct current voltage supplied from the battery 80 and supplies the boosted direct current voltage to the inverter during discharging of the battery 80. The inverter converts direct current power supplied from the converter into alternating current power to drive the MG 10.

The inverter converts the alternating current power generated by the MG 10 into the direct current power during charging of the battery 80, and supplies the direct current power to the converter. The converter steps down the direct current voltage supplied from the inverter to a voltage suitable for charging of the battery 80 and supplies the direct current voltage to the battery 80.

The SMR 50 is electrically connected to a power line 45 connecting the battery 80 and the PCU 40. When the SMR 50 is closed (turned ON) in response to a control signal from the ECU 100, power may be exchanged between the battery 80 and the PCU 40. On the other hand, when the SMR 50 is opened (turned OFF) in response to the control signal from the ECU 100, electrical connection between the battery 80 and the PCU 40 is disconnected.

The battery 80 stores power for driving the MG 10. The battery 80 is a rechargeable direct current power source (secondary battery), and is configured by electrically connecting a plurality of single batteries 80a in series. The single batteries 80a are, for example, lithium-ion batteries.

The monitoring unit 90 is a device for monitoring the state of the battery 80, and includes a voltage sensor 92, a current sensor 94, and a temperature sensor 96. The voltage sensor 92 detects a voltage VB of the battery 80. The current sensor 94 detects a current IB input to and output from the battery 80. The temperature sensor 96 detects a temperature TB of the battery 80. The monitoring unit 90 outputs a result of the detection performed by each of the sensors to the ECU 100.

The electrified vehicle 1 includes an inlet 60 and is configured to be able to perform external charging of the battery 80 using electric vehicle supply equipment (EVSE) 200. The inlet 60 is configured to be connectable to a connector 220 provided at a distal end of a charging cable 210 of the EVSE 200. The inlet 60 is electrically connected to the power line 45 via a charging circuit 70. In the present embodiment, when the SMR 50 is closed, the inlet 60 and the battery 80 are electrically connected, and the external charging is enabled.

The ECU 100 includes a central processing unit (CPU) 102, a memory 104 such as a read only memory (ROM) and a random access memory (RAM), and an input and output port (not shown) for inputting and outputting various signals. The ECU 100 executes control related to traveling of the vehicle and charging and discharging of the battery 80 based on signals received from each of the sensors of the monitoring unit 90, and programs and maps stored in the memory 104.

In addition, the ECU 100 limits a current flowing through a component based on a heat generation state of the component as a protection measure for heat generation of the component provided in a current path through which the current input to and output from the battery 80 flows.

The ECU 100 corresponds to a "control device" in an embodiment. The ECU 100 may be divided into a plurality of ECUs by function. It should be noted that, it is possible to perform processing by constructing at least a part of the ECU 100 using dedicated hardware (electronic circuit).

Protection Measure for Component

In the electrified vehicle 1 according to the present embodiment, heat in proportion to approximately the square of a current value is generated in the component by the current flowing through the component provided in the current path of the current input to and output from the battery 80. Therefore, a protection measure for the heat generation of the component is needed. Hereinafter, a protection measure for a component in the electrified vehicle 1 according to the present embodiment will be described.

In the present embodiment, as the protection measure for the component, an evaluation function representing the heat generation state of the component is generated based on the current flowing through the component and an energization time, and allowable power indicating a control upper limit value of power input to and output from the battery 80 is limited based on an output value of the evaluation function. That is, the current flowing through the component is limited based on the heat generation state of the component.

In general, it is known that the heat generation of the component is proportional to the square of the current value flowing through the component, and it is also known that heat dissipation from the component can be approximated by a first-order delay system. When the function is represented as an evaluation function F, for example, the function is represented as in Equation (1).

$$F(n+1) = \{(K(n) - 1) \times F(n) + I(n)^2\}/K(n) \ \ldots \ (1)$$

Here, n represents the number of control cycles from control start, that is, an elapsed time. I(n) represents the current value flowing through the component when the number of control cycles is n, and K(n) is a coefficient for performing a first-order delay approximation, that is, a coefficient corresponding to a time constant. The coefficient K(n) has a different value for each component and is set by a map or the like that is predetermined by an experiment or the like. In addition, the coefficient K(n) may have different values in accordance with the current value.

For a component that is a protection target, the coefficient K of the evaluation function F is predetermined by an experiment, so that the heat generation state of the component can be estimated based on the current flowing through the component and the energization time. For each component, by limiting the current such that an output value of the evaluation function F does not exceed a threshold value determined from a heat resistance limit of the component, the heat generation of the component can be suppressed.

Regarding Problem in Protection Measure

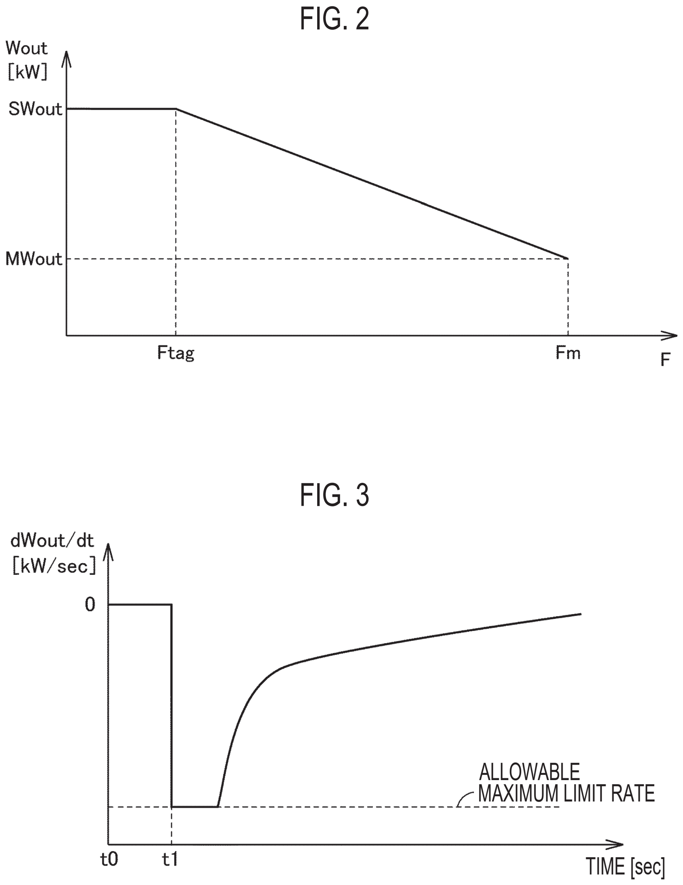

FIGS. 2 and 3 are diagrams for describing a protection measure for a component and a problem of the protection measure according to a comparative example. FIG. 2 is a graph showing an outline of limit processing of output allowable power Wout of the battery 80 according to the comparative example. In FIG. 2, the output value of the evaluation function F for the component on the current path of the battery 80 is shown on a horizontal axis, and the output allowable power Wout is shown on a vertical axis. The output allowable power Wout is the control upper limit value of the power output from the battery 80.

When energization to the component is started, a component temperature gradually increases with time. In addition, as the component temperature increases, the output value of the evaluation function F of the component also increases. A limit start value Ftag for starting limit of the output allowable power Wout is set in the output value of the evaluation function F. In addition, a threshold value Fm based on a heat resistance limit temperature of the component is set in the output value of the evaluation function F.

When the output value of the evaluation function F is less than the limit start value Ftag, the output allowable power Wout is set to output allowable power SWout determined based on a state of charge (SOC) and the temperature of the battery 80.

When the output value of the evaluation function F is equal to or greater than the limit start value Ftag, the limit of the output allowable power Wout is started. It should be noted that the "limit of the output allowable power Wout" means reducing the magnitude (corresponding to the absolute value) of the output allowable power Wout. The same applies to limit of the input allowable power Win that is the control upper limit value of the power input to the battery 80.

As shown in FIG. 2, the output allowable power Wout decreases linearly (first-order functionally) with respect to the output value of the evaluation function F. It should be noted that, the output allowable power MWout when the output value of the evaluation function F is the threshold value Fm is set based on output power of the battery 80 such that a heat generation amount and a heat dissipation amount are balanced in the component, the increase in the component temperature is suppressed, and the component temperature can be maintained at or below the heat resistance limit temperature.

When inclination of a first-order function of the output value of the evaluation function F and the output allowable power Wout is defined as Ko, a relationship of Equation (2) is satisfied between Swout, MWout, Ftag, and Fm.

$$MWout = SWout - Ko \times (Fm - Ftag) \dots (2)$$

In the comparative example, the output allowable power Wout is limited in accordance with the output value of the evaluation function F, based on the relationship between the output value of the evaluation function F shown in FIG. 2 and the output allowable power Wout. The output allowable power Wout when the output value of the evaluation function F is equal to or greater than the limit start value Ftag is determined from the relationship of Equation (2) as Wout = SWout - Ko × (F - Ftag). That is, the output allowable power Wout is determined by performing proportional control calculation for reducing a deviation F - Ftag of the output value of the evaluation function F with respect to the limit start value Ftag. The Ko corresponds to a proportional gain.

In FIG. 2, the limit start value Ftag is set to a value at which the output value of the evaluation function F can be maintained at the threshold value Fm or less when the output allowable power Wout is decreased in proportion to the deviation F - Ftag of the output value of the evaluation function F with respect to the limit start value Ftag.

FIG. 3 is a graph showing an example of a temporal change of a limit rate of the output allowable power Wout in the limit processing shown in FIG. 2. The "limit rate of the output allowable power Wout" is a time change rate (that is, a decrease speed) when the output allowable power Wout is decreased, and is represented by dWout/dt [kW/sec]. The limit rate is represented by a negative value.

It should be noted that the allowable maximum limit rate is set in the limit rate of the output allowable power Wout. The "allowable maximum limit rate" means an allowable maximum value of the magnitude of the decrease speed of the output allowable power Wout (corresponding to the absolute value). When the output allowable power Wout is sharply decreased, traveling performance of the electrified vehicle 1 may be decreased due to insufficiency of the output power of the battery 80. Therefore, the allowable maximum limit rate is set in advance by an experiment or the like such that the traveling performance of the electrified vehicle 1 is not decreased.

In FIG. 3, the output value of the evaluation function F between time t0 and time t1 is less than the limit start value Ftag. Therefore, the limit of the output allowable power Wout is not performed, and the limit rate is 0 [kW/sec].

When the output value of the evaluation function F exceeds the limit start value Ftag at time t1, the limit of the output allowable power Wout is started. The output allowable power Wout is determined by the proportional control calculation for reducing the deviation F - Ftag of the output value of the evaluation function F with respect to the limit start value Ftag as described above. Immediately after time t1, a control amount Ko $\times$ (F - Ftag) increases in accordance with the deviation F - Ftag, and thus the magnitude (absolute value) of the limit rate also increases. It should be noted that the limit rate is adjusted such that the limit rate does not exceed the allowable maximum limit rate. As the deviation F - Ftag is reduced, the magnitude (absolute value) of the limit rate is also gradually reduced.

In the comparative example as described above, the output allowable power Wout is decreased in proportion to the deviation F - Ftag of the output value of the evaluation function F with respect to the limit start value Ftag. Since the output value of the evaluation function F decreases in accordance with the square of the current value flowing through the component, the limit rate decreases based on the square of the current value. Therefore, the allowable maximum limit rate cannot be fully used.

In addition, in order to limit the output allowable power Wout such that the output value of the evaluation function F does not exceed the threshold value Fm under the limit rate smaller than the allowable maximum limit rate, the limit start value Ftag has to be set to a low value. Therefore, a requested output of the electrified vehicle 1 cannot be satisfied, and there is concern that the traveling performance of the electrified vehicle 1 may be decreased.

Protection Measure According to Present Embodiment

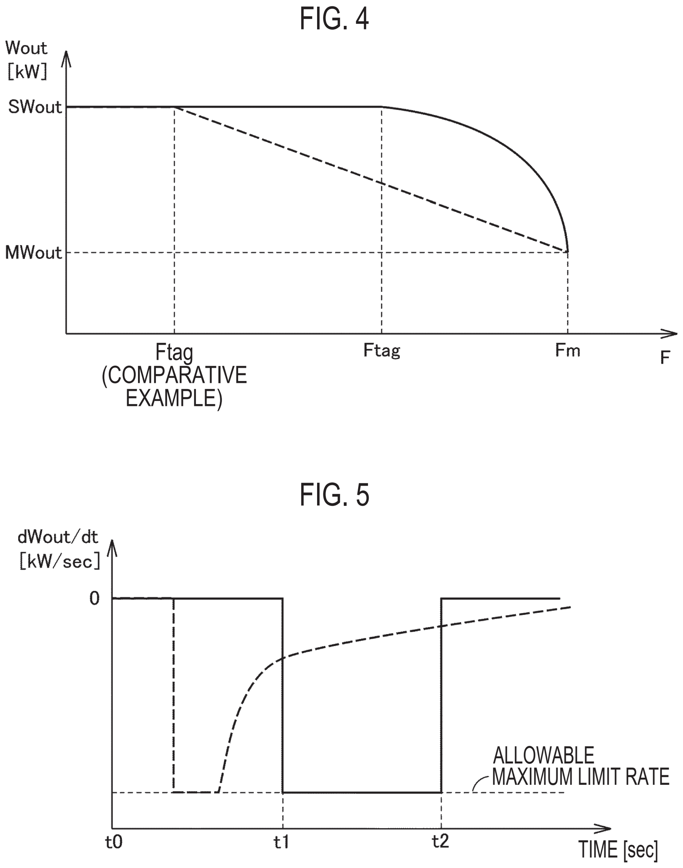

In response to the problems, the present embodiment proposes a protection measure by which the allowable maximum limit rate can be more effectively used. FIGS. 4 and 5 are diagrams for describing the protection measure for the component according to the present embodiment.

FIG. 4 is a graph showing an outline of limit processing of the output allowable power Wout of the battery 80 according to the present embodiment. In FIG. 4, the output value of the evaluation function F for the component on the current path of the battery 80 is shown on a horizontal axis, and the output allowable power Wout is shown on a vertical axis. In FIG. 4, a waveform of the output allowable power Wout according to the present embodiment is shown by a solid line, and a waveform of the output allowable power Wout according to the comparative example shown in FIG. 2 is shown by a broken line.

Also in the present embodiment, as in the comparative example, the limit start value Ftag for starting the limit of the output allowable power Wout and the threshold value Fm based on the heat resistance limit temperature of the component are set in the output value of the evaluation function F. It should be noted that the limit start value Ftag according to the present embodiment is greater than the limit start value Ftag according to the comparative example.

In the present embodiment, the limit start value Ftag is set to a value at which the output value of the evaluation function F can be maintained at the threshold value Fm or less when the output allowable power Wout is decreased at the allowable maximum limit rate. Therefore, in contrast to the comparative example, the output allowable power Wout decreases non-linearly with respect to the output value of the evaluation function F.

FIG. 5 is a graph showing an example of a temporal change of a limit rate of the output allowable power Wout in the limit processing shown in FIG. 4. As in FIG. 3, the limit rate is represented by a negative value. In FIG. 5, the limit rate according to the present embodiment is shown by a solid line, and the limit rate according to the comparative example shown in FIG. 3 is shown by a broken line.

In FIG. 5, the output value of the evaluation function F between time t0 and time t1 is less than the limit start value Ftag. Therefore, the limit of the output allowable power Wout is not performed, and the limit rate is 0 [kW/sec].

When the output value of the evaluation function F exceeds the limit start value Ftag at time t1, the limit of the output allowable power Wout is started. The limit rate of the output allowable power Wout is set to the allowable maximum limit rate. That is, the output allowable power Wout decreases at the allowable maximum limit rate after time t1.

The evaluation function F decreases in accordance with the square of the current flowing through the component as the output allowable power Wout decreases. When the output value of the evaluation function F decreases to the limit start value Ftag at time t2, the limit rate is set to 0 [kW/sec].

As can be seen from FIG. 5, in the present embodiment, the limit start value Ftag is greater as compared with that in the comparative example, and thus a timing (time t1 in the drawing) at which the limit of the output allowable power Wout is started in accordance with the increase in the output value of the evaluation function F is delayed. Further, in the present embodiment, as compared with the comparative example, a time for which the limit rate is the allowable maximum limit rate (time from time t1 to time t2 in the drawing) is long.

As a result, in the present embodiment, the length of a time for which the limit rate is less than 0 [kW/sec], that is, the length of a time for which the limit of the output allowable power Wout is executed, is shorter in the present embodiment than that in the comparative example.

According to the present embodiment as described above, the output allowable power Wout is limited by using the allowable maximum limit rate, so that the limit start value Ftag can be increased as compared with that in the comparative example, and the time for which the limit of the output allowable power Wout is executed can be shortened. Accordingly, it is possible to satisfy the requested output of the electrified vehicle 1 while the heat generation of the component is suppressed. That is, the decrease in the traveling performance of the electrified vehicle 1 due to the protection measure for the component can be suppressed.

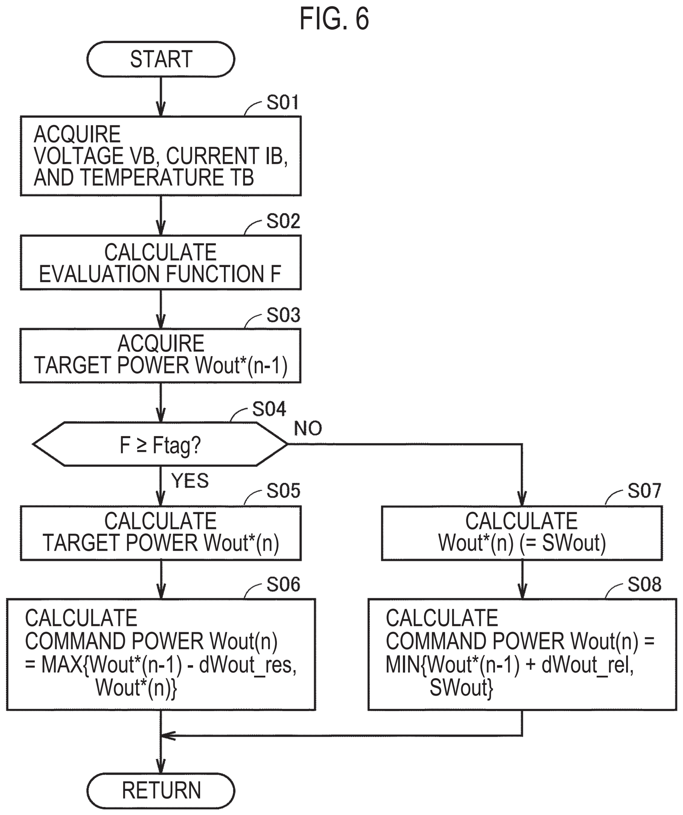

FIG. 6 is a flowchart for describing a procedure of the limit processing of the output allowable power Wout of the battery 80 according to the present embodiment. The flowchart shown in FIG. 6 is executed by the ECU 100 for each predetermined control cycle. Hereinafter, the steps are abbreviated as S.

As shown in FIG. 6, the ECU 100 acquires a detection value of the voltage VB of the battery 80, a detection value of the current IB input to and output from the battery 80, and a detection value of the temperature TB of the battery 80 from the monitoring unit 90 in S01.

The ECU 100 calculates the output value of the evaluation function F of the component that is a protection target, by using Equation (1) based on the current IB input to and output from the battery 80 in S02. In S02, the coefficient K(n) in Equation (1) is set by a map or the like that is predetermined by an experiment or the like for each component.

The ECU 100 acquires target power Wout*(n-1) that is a target value of the output allowable power Wout in a previous control cycle in S03.

The ECU 100 compares the output value of the evaluation function F determined in S02 with the limit start value Ftag in S04.

When the output value of the evaluation function F is equal to or greater than the limit start value Ftag (when YES determination is made in S04), the ECU 100 calculates target power Wout*(n) in a current control cycle based on the output value of the evaluation function F in S05. In S05, the ECU 100 has, in advance, a control map in which the relationship between the output value of the evaluation function F shown in FIG. 4 and the output allowable power Wout is determined. The ECU 100 uses the control map to calculate, as the target power Wout*(n), the output allowable power Wout corresponding to the output value of the evaluation function F.

The ECU 100 calculates command power Wout(n) that is a control command value of the output allowable power Wout in the current control cycle in S06. In S06, the ECU 100 determines a value obtained by decreasing the previous target power Wout*(n-1) in accordance with the allowable maximum limit rate. When the magnitude (absolute value) of the allowable maximum limit rate is defined as dWout_res/dt and the length of the control cycle is defined as dt, the value is represented by Wout*(n-1) - dWout_res. Then, the ECU 100 sets, as the command power Wout(n), a larger one of the value and the target power Wout*(n) in the current control cycle.

That is, when the output value of the evaluation function F is equal to or greater than the limit start value Ftag, the ECU 100 decreases the command power Wout in each control cycle at the allowable maximum limit rate, within a range in which the command power Wout is not less than target power Wout* in each control cycle.

On the other hand, when the output value of the evaluation function F is less than the limit start value Ftag (when NO determination is made in S04), the ECU 100 calculates the target power Wout*(n) in the current control cycle based on the SOC and the temperature TB of the battery 80. In S07, the ECU 100 calculates the SOC of the battery 80. As a calculation method of the SOC, a known method such as a method using an SOC-open circuit voltage (OCV) curve, a method by current integration, or a combination thereof is used. Then, the ECU 100 calculates, as the target power Wout*(n), the output allowable power SWout based on the SOC and the temperature TB of the battery 80.

The ECU 100 calculates the command power Wout(n) in the current control cycle in S08. In S08, the ECU 100 increases the command power Wout in each control cycle at an allowable maximum relaxation rate, within a range in which the command power Wout does not exceed the target power Wout*(= SWout) in each control cycle.

Specifically, the allowable maximum relaxation rate is set in a relaxation rate of the output allowable power Wout. The "relaxation rate of the output allowable power Wout" is a time change rate (that is, an increase speed) when the output allowable power Wout is increased, and is represented by dWout/dt [kW/sec]. The relaxation rate is represented by a positive value. The "allowable maximum relaxation rate" means an allowable maximum value of the magnitude of the increase speed of the output allowable power Wout (corresponding to the absolute value). When the output allowable power Wout is sharply increased, operability of the electrified vehicle 1 may be decreased due to a sudden change in the output power of the battery 80. Therefore, the allowable maximum relaxation rate is set in advance by an experiment or the like such that the operability of the electrified vehicle 1 is not decreased.

In S08, the ECU 100 determines a value obtained by increasing the previous target power Wout*(n-1) in accordance with the allowable maximum relaxation rate. When the magnitude (absolute value) of the allowable maximum relaxation rate is defined as dWout_rel/dt and the length of the control cycle is defined as dt, the value is represented by Wout*(n-1) + dWout_rel. The ECU 100 sets, as the command power Wout(n) in the current control cycle, a smaller one of the value and the target power Wout*(n) (= SWout) in the current control cycle.

As described above, in the limit processing of the output allowable power Wout of the battery 80, the ECU 100 decreases the output allowable power Wout at the allowable maximum limit rate when the output value of the evaluation function F is equal to or greater than the limit start value Ftag. Further, when the output value of the evaluation function F is less than the limit start value Ftag, the ECU 100 increases the output allowable power Wout at the allowable maximum relaxation rate. In this way, since the time for which the power input to and output from the battery 80 is limited is shortened, it is possible to suppress the decrease in the traveling performance of the electrified vehicle 1 due to the protection measure for the component.

It should be noted that, in the embodiment, the limit processing of the output allowable power Wout of the battery 80 has been described, but the same method is applied to the limit processing of the input allowable power Win of the battery 80.

It should be considered that the embodiments disclosed here are illustrative in all respects and not restrictive. The scope of the present disclosure is shown by the scope of claims rather than the description of the embodiment described above, and is intended to include all modifications within the meaning and scope of equivalents of the claims.

**Claims**

1. An electrified vehicle comprising:

   an electric motor (10) configured to generate a traveling drive force of the electrified vehicle;
   a power storage device (80) configured to input and output power to and from the electric motor; and
   a control device (100) configured to

   set allowable power for the power input to and output from the power storage device (80) based on a temperature and a power storage amount of the power storage device, and
   to control the electric motor (10) such that the power input to and output from the power storage device does not exceed the allowable power, wherein:

   the control device has an allowable maximum limit rate for a limit rate that is a decrease speed of the allowable power;
   the control device is configured to decrease the allowable power at the allowable maximum limit rate when an evaluation function for a temperature of a component provided on a path of a current input to and output from the power storage device is equal to or greater than a limit start value; and
   the limit start value is set to a value at which the evaluation function is maintainable at or less than a threshold value determined from a heat resistance limit temperature of the component when the allowable power is decreased at the allowable maximum limit rate.

2. The electrified vehicle according to claim 1, wherein the limit start value is greater than a value at which the evaluation function is maintainable at or less than the threshold value when the allowable power is decreased in proportion to a deviation of the evaluation function with respect to the limit start value.

3. The electrified vehicle according to claim 1, wherein the control device (100) is configured to, when the evaluation function is equal to or greater than the limit start value,

   calculate a target value of the allowable power based on the evaluation function in each control cycle using a control map that is predetermined, and
   determine a control command value of the allowable power in a current control cycle by decreasing the target value in a previous control cycle at the allowable maximum limit rate, within a range in which the control command value is not less than the target value in the current control cycle.

4. The electrified vehicle according to claim 3, wherein:

   the control map is a map by which the target value is specifiable from the evaluation function; and
   the target value changes non-linearly with respect to the evaluation function from a first power value determined from the temperature and the power storage amount of the power storage device to a second power value at which the evaluation function is maintainable at the threshold value, in a region in which the evaluation function is equal to or greater than the limit start value and equal to or less than the threshold value.

5. The electrified vehicle according to claim 3 or 4, wherein:

the control device (100) has an allowable maximum relaxation rate for a relaxation rate that is a relaxation speed of the allowable power; and
the control device is configured to, when the evaluation function is less than the limit start value,

calculate the target value in the current control cycle based on the temperature and the power storage amount of the power storage device (80), and
determine the control command value of the allowable power in the current control cycle by increasing the target value in the previous control cycle at the allowable maximum relaxation rate, within a range in which the control command value does not exceed the target value in the current control cycle.

# FIG. 1

# FIG. 2

# FIG. 3

FIG. 4

FIG. 5

# FIG. 6

START

ACQUIRE
VOLTAGE VB, CURRENT IB,
AND TEMPERATURE TB — S01

CALCULATE
EVALUATION FUNCTION F — S02

ACQUIRE
TARGET POWER Wout*(n-1) — S03

S04
$F \geq Ftag?$ — NO

YES

CALCULATE
TARGET POWER Wout*(n) — S05

CALCULATE
COMMAND POWER Wout(n)
= MAX{Wout*(n-1) - dWout_res,
Wout*(n)} — S06

CALCULATE
Wout*(n) (= SWout) — S07

CALCULATE
COMMAND POWER Wout(n) =
MIN{Wout*(n-1) + dWout_rel,
SWout} — S08

RETURN

Europäisches
Patentamt

European
Patent Office

Office européen
des brevets

# EUROPEAN SEARCH REPORT

**Application Number**

EP 25 22 0883

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/052567 A1 (TOYOTA MOTOR CO LTD [JP]) 16 April 2015 (2015-04-16) * paragraphs [0015], [0035], [0041], [0143], [0145], [0147], [0153], [0159], [0160]; figure 12 * | 1-5 | INV. B60L53/62 B60L58/12 B60L58/25 B60L3/00 |
| A | US 2010/070133 A1 (ISHISHITA TERUO [JP]) 18 March 2010 (2010-03-18) * paragraphs [0087] - [0095], [0097], [0098], [0104], [0109], [0111], [0113], [0121]; figure 1 * | 1-5 | |
| A | JP 2017 071299 A (TOYOTA MOTOR CORP) 13 April 2017 (2017-04-13) * the whole document * | 1-5 | |
| A | JP 2012 096712 A (TOYOTA MOTOR CORP) 24 May 2012 (2012-05-24) * the whole document * | 1-5 | |

**TECHNICAL FIELDS SEARCHED (IPC)**

B60L

The present search report has been drawn up for all claims

| Place of search | Date of completion of the search | Examiner |
|---|---|---|
| The Hague | 9 April 2026 | Lucas Mariscal, A |

EPO FORM 1503 03.82 (P04C01)

## ANNEX TO THE EUROPEAN SEARCH REPORT
## ON EUROPEAN PATENT APPLICATION NO.

EP 25 22 0883

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2026

| Patent document cited in search report | | Publication date | Patent family member(s) | | Publication date |
|---|---|---|---|---|---|
| WO 2015052567 | A1 | 16-04-2015 | CN | 105612081 A | 25-05-2016 |
| | | | JP | 5862631 B2 | 16-02-2016 |
| | | | JP | 2015076958 A | 20-04-2015 |
| | | | US | 2016236581 A1 | 18-08-2016 |
| | | | WO | 2015052567 A1 | 16-04-2015 |
| US 2010070133 | A1 | 18-03-2010 | CN | 101627519 A | 13-01-2010 |
| | | | DE | 112008000536 T5 | 31-12-2009 |
| | | | JP | 4811301 B2 | 09-11-2011 |
| | | | JP | 2008220088 A | 18-09-2008 |
| | | | US | 2010070133 A1 | 18-03-2010 |
| | | | WO | 2008111593 A1 | 18-09-2008 |
| JP 2017071299 | A | 13-04-2017 | JP | 6451582 B2 | 16-01-2019 |
| | | | JP | 2017071299 A | 13-04-2017 |
| JP 2012096712 | A | 24-05-2012 | JP | 5488407 B2 | 14-05-2014 |
| | | | JP | 2012096712 A | 24-05-2012 |

EPO FORM P0459

For more details about this annex : see Official Journal of the European Patent Office, No. 12/82

# EP 4 759 622 A1

**Patent documents cited in the description**

- JP 2015147472 A